# EUROPEAN PATENT APPLICATION

(11) **EP 3 085 505 A1**
(43) Date of publication of application: **26.10.2016**
(21) Application number: 15165038.9
(22) Date of filing: 24.04.2015
(51) Int. Cl.: B27K 3/22, B27K 3/34

(54) **A COMPOSITION COMPRISING AN ACTIVE INGREDIENT COMPOSITION AND AN ADDITIVE COMPOSITION FOR PENETRATING A TIMBER**

(71) Applicant: RÜTGERS Organics GmbH, 68305 Mannheim (DE)
(72) Inventor: Liese, Thomas, 68165 Mannheim (DE); Beez, Volker, 68642 Bürtstadt (DE); Schmitt, Stefan, 69488 Birkenau/Reisen (DE); Härtner, Helmut, 67246 Dirmstein (DE)
(74) Representative: Herzog, Fiesser & Partner Patentanwälte PartG mbB

(57) **Abstract**

This invention relates to a composition for a timber preservative comprising as constituents: i. a Cu-salt; ii. a further biocide; iii. an additive; wherein the additive comprises a polyalkylene ether and; a) an amine or a salt thereof wherein the amine comprises a polyalkylene ether moiety; or b) a fatty acid or a salt thereof; or c) both (a) and (b), wherein a weight ratio of the Cu of the Cu-salt to the additive is in the range from 0.1 to 5.

## Description

### FIELD OF THE INVENTION

In general, the invention relates to a composition comprising as constituents; a Cu-salt, a further biocide, an additive, wherein the additive comprises a polyalkylene ether and; (a) an amine or a salt thereof wherein the amine comprises a polyalkylene ether moiety, or (b) a fatty acid or a salt thereof, or (c) both (a) and (b), wherein the weight ratio of the Cu of the Cu-salt to the additive is in the range from 0.1 to 5. The invention relates to a treating composition comprising the aforementioned composition and an aqueous solvent in an amount of at least 50 wt.-%. The invention also relates to a process for producing a treating composition comprising the process steps of; providing an active ingredient composition comprising a Cu-salt and a further biocide; providing an additive composition differing from the active ingredient composition, wherein the additive composition comprises a polyalkylene ether and; (a) an amine or a salt thereof wherein the amine comprises a polyalkylene ether moiety, or (b) a fatty acid or a salt thereof, or (c) both (a) and (b); followed by contacting the active ingredient composition with the additive composition. The invention relates to a kit for a timber preservative comprising a first compartment and a further compartment. The invention relates to a timber formulation comprising a timber wherein the timber comprises; a Cu-salt, a further biocide, a poly-alkylene ether and; (a) an amine or a salt thereof wherein the amine comprises a polyalkylene ether moiety, (b) a fatty acid or a salt thereof or (c) both (a) and (b). The invention also relates to a process for producing a timber formulation comprising the process steps of; providing a timber to a vessel, applying an under-atmospheric pressure to the vessel, contacting the timber in the vessel with a treating composition and applying an over-atmospheric pressure to the vessel. The invention relates to a construction comprising a timber. The invention relates to a use of an additive composition for enhancing the penetration of a treating solution in a timber. The invention further relates to a use of a timber in a wood comprising product wherein the timber is obtained from the timber formulation according to the invention or the process according to the invention.

### BACKGROUND OF THE INVENTION

Wood is a versatile material which can be used in various industries. Due to its wide range of applications, it is important to ensure its longevity and/or durability and thus, it must be protected. Research into wood preservation and wood preservatives are documented in the prior art. The aim of improving the resistance of wood to fungal and insect attack led to the development of preservatives incorporating additives including but not limited to; chromate compounds, quaternary ammonium compounds, and copper.

Works relating to wood preservatives in the prior art include Seifen-Ole-Fette-Wachse 109, vol. no. 20, 1983, pages 603 to 606. This document disclosed the use of quaternary ammonium compounds in water-soluble and solvent-containing wood preservatives. Another document is DE-A Nos. 3,502,939, 3,621,360 or 3,718,012 which further disclosed that by combining quaternary ammonium compounds with other organic or inorganic compounds, an increase in protection by the wood preservative was possible. DE-C-34 47 027 disclosed wood preservatives based on copper, boron, alkanol amines and quaternary ammonium salts. A further document, DE-A-42 28 352 disclosed copper salts, alcohol amines and polymeric quaternary ammonium borates. Another document, WO2004/091875, disclosed compositions comprising metal compounds (including copper) combined with organic biocides as wood preservatives.

### SUMMARY OF THE INVENTION

It is clear from the prior art that the use of additives including; copper-, boron-compounds, alkanol amines and quaternary ammonium salts, in a wood preservative have achieved some success in the protection of wood. Their effectiveness however, remains to be further improved in order to ensure the long-term protection of the timber. A timber treated with a short-lasting wood preservative and constructions built using said timber, can lead to increased maintenance costs, since the short-lasting wood preservative has to be frequently renewed.

When wood is used in buildings, it is normal for several timber pieces to be joined via interfaces occurring at the surfaces of each of the timber pieces being joined. These interfaces cannot be as easily maintained as the exterior of the wood. Usually wooden constructions are subjected to various amounts of mechanical stress, e.g. flooring and utility poles, to name but a few. A major portion of this stress causes at least two wooden parts of the construction in the area of the interface to move against each other. This quite often causes the surface protection of the wooden pieces, such as lacquer or paint, to peel off or deteriorate otherwise. These portions then become more susceptible to environmental hazards, such as insect and fungal attack or moisture and climate changes. With the surface protection now damaged or even completely removed, the impregnation of the timber becomes particularly important for the longevity of the construction. Further deterioration of surface protection can be caused by the holes for screws which are used to connect the timber interfaces. These holes are often easily penetrated by water and cannot be tightly protected by preservative coatings. Should soil and/or foliage material come into contact with the areas of the surface where the surface protection has been deteriorated, the exposed timber will become more susceptible to microbe attack, e.g. soft-rot and mold. For at least these aforementioned reasons, it is important that the preservative is able to strongly penetrate and impregnate the timber.

The general object of this invention is to provide at least a partial solution to at least one of the problems encountered in the state of the art in relation to a chromium-free wood preservative which remains effective over a long period of time.

An object of the invention is to provide a composition wherein the composition is a treating composition which can be used as part of a timber preservative, wherein timber can be more efficiently treated.

A further object of the invention is to provide a process for producing a treating composition, wherein there is less need of incisions on the surface of the timber to be treated.

Another object of the invention is to provide a kit comprising; a first compartment and a further compartment, for use as a timber preservative.

A further object of the invention is to provide a timber formulation, wherein an even and smooth surface of the timber has improved uptake of a treating composition and thus in particular the active ingredient incorporated in the treating composition.

It is also an object to provide a process for producing a timber formulation wherein the timber, penetrated with a treating composition according to the invention, has an improved surface protection.

It is furthermore an object of the invention to provide a timber formulation, which, when used as part of a wood-comprising product, improves the longevity and/or durability of the wood-comprising product.

More specifically, it is an object of the invention to provide a timber formulation that can be used in a wood comprising product which can be further used for construction purposes.

Another object of the invention is to provide a treating composition that gives improved mechanical stability to a timber when used in a wood comprising product or construction thereof.

A further object of the invention is to provide protection to the surface of a timber wherein the timber may be comprised primarily of pine, most preferably comprised primarily of red pine, with a reduced need to deform it beforehand (e.g. with incisions), thus, obtaining a superior quality wood surface with the same, if not improved protection against fungi and insect attack.

### DETAILED DESCRIPTION OF THE INVENTION

A contribution to achieving at least one of the above objects is made by the following embodiments:
|1| A composition for a timber preservative comprising as constituents:
   i. a Cu-salt;
   ii. a further biocide;
   iii. an additive;
      wherein the additive comprises a polyalkylene ether and;
      a) an amine or a salt thereof wherein the amine comprises a poly-alkylene ether moiety; or
      b) a fatty acid or a salt thereof; or
      c) both (a) and (b), wherein both (a) and (b) are preferred;
      wherein components i. and ii. are the active ingredients. It is preferred that at least one further organic compound is added to the active ingredients, most preferably two further organic compounds; and
      wherein a weight ratio of the Cu of the Cu-salt to the additive is in the range from 0.1 to 5, more preferably 0.15 to 4, most preferably from 0.2 to 3.
|2| The composition according to embodiment |1|, wherein the further biocide is a cyclic organic compound comprising a heteroatom selected from the group of O, B, N, S or P, or a combination of at least two thereof in a cycle
|3| The composition according to any of the preceding embodiments, wherein the further biocide has a negatively charged heteroatom.
|4| The composition according to any of the preceding embodiments wherein the Cu-salt (i.) is selected from the group consisting of CuCO₃, CuCl₂, CuSO₄, Cu(NO₃)₂, Cu(HCO₃)₂, Cu(OH)₂•CuCO₃, CuO, or a combination of at least two thereof.
|5| The composition according to any of the preceding embodiments, wherein the further biocide is a betain or its derivative, or both.
|6| The composition according to any of the preceding embodiments, wherein the further biocide is of the general formula (I): 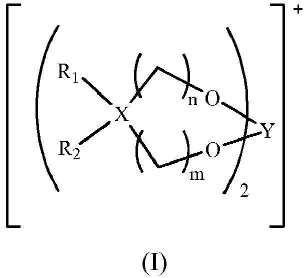 wherein in general formula (I)
   - X: is selected from elements; P, N, or B, more preferably N or B, most preferably N;
   - Y: is B;
   - R₁, R₂: are independently from each other a saturated linear hydrocarbon containing from 1 to 20 C atoms, preferably from 5 to 15 atoms, more preferably from 8 to 12 atoms; and
   - n, m: are, independently from each other, any integer value within the range from 1 to 20. It is preferred that n is an integer value in the range from 1 to 10 and m is an integer value in the range from 1 to 20; it is more preferred that n is an integer value in the range from 1 to 10 and m is an integer value in the range from 1 to 10; it is most preferred that n is an integer value in the range from 2 to 5 and m is an integer value in the range from 2 to 5.
|7| The composition according to any of the preceding embodiments, wherein the poly-alkylene ether is of general formula (II): 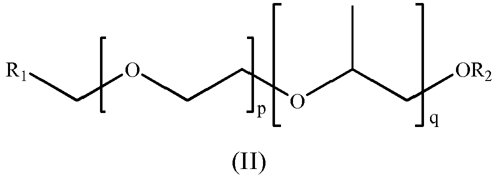 wherein in general formula (II)
   - R₁: is a saturated linear or branched hydrocarbon containing 1 to 30 C atoms, more preferably 1 to 15 C atoms, most preferably 5 to 7 C atoms;
   - R₂: is H or a saturated linear hydrocarbon, preferably H;
   - p, q: are, independently from each other, an integer value in the range from 1 to 100, more preferably in the range from 2 to 60, most preferably in the range from 3 to 15;
|8| The composition according to any of the preceding embodiments, wherein the amine or a salt thereof wherein the amine comprises a polyalkylene ether moiety is of the general formula (III): 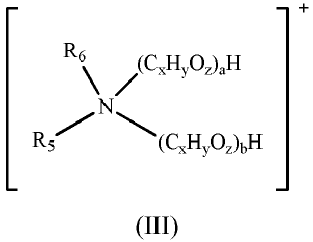 wherein in general formula (III)
   - R₅, R₆: is a saturated linear or branched hydrocarbon preferably containing 1 to 30 C atoms, more preferably containing 2 to 25 C atoms, most preferably containing 3 to 15 C atoms, wherein the hydrocarbon may also comprise a heteroatom selected from the group of O, N or S, or a combination thereof;
   - x, y, z: are each independently an integer value in the range from 1 to 100, more preferably an integer value in the range from 2 to 50, most preferably an integer value in the range from 2 to 15;
   - a, b: are each independently an integer value in the range from 1 to 100, more preferably an integer value in the range from 2 to 60, most preferably an integer value in the range from 3 to 20.
|9| The composition according any of the preceding embodiments, wherein the fatty acid or a salt thereof is of the general formula, (IV): 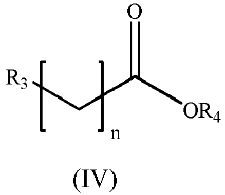 wherein in general formula (IV)
   - R₃: is a saturated or unsaturated linear or branched, preferably branched, hydrocarbon containing 1 to 30 C atoms, more preferably containing 2 to 25 C atoms, most preferably containing 3 to 15 C atoms;
   - R₄: is H or a linear hydrocarbon or a salt, preferably H;
   - n: is an integer value in the range from 1 to 50, more preferably in the range from 2 to 30, most preferably in the range from 4 to 15.
|10|A treating composition for a timber preservative comprising:
   i. a composition according to any one of the preceding embodiments in an amount in the range from 0.01 to 30 wt.-%, preferably in the range from 0.2 to 20 wt.-% and more preferably in the range from 0.5 to 10 wt.-%; and
   ii. an aqueous solvent in an amount of at least 50 wt.-%, more preferably at least 60 wt.-%, most preferably at least 70 wt.-%;
      each wt.% based on the total weight of the treating composition.
      All aspects and embodiments which have been disclosed pertaining to both the composition and the treating composition according to the invention apply also to the corresponding features of the process for producing a treating composition according to the invention and *vice versa*.
|11|A process for producing a treating composition, comprising the following process steps;
   I. providing an active ingredient composition comprising;
      i. a Cu-salt;
      ii. a further biocide, preferably a fungicide;
   II. providing an additive composition differing from the active ingredient composition wherein the additive composition comprises a polyalkylene ether and:
      a) an amine or a salt thereof wherein the amine comprises a polyalkylene ether moiety; or
      b) a fatty acid or a salt thereof; or
      c) both (a) and (b), wherein both (a) and (b) are preferred;
   III. contacting the active ingredient composition (I.) with the additive composition (II.).
|12| The process according to embodiment |11|, wherein an aqueous solvent in an amount of at least 50 wt.-%, more preferably in an amount of at least 60 wt.-%, most preferably in an amount of at least 70 wt.-%, is added.
|13| The process according to embodiment |12|, wherein the aqueous solvent is added to components (i.) and (ii.) of process step I. to give a treating solution prior to mixing the active ingredient composition (I.) with the additive composition (II.).
   All aspects and embodiments of the invention which have thus far been disclosed; i.e., the composition, the treating composition and the process for producing a treating composition, also apply to the features of the kit according to the invention and *vice versa*.
|14|A kit for a timber preservative comprising:
   a. a first compartment, and
   b. a further compartment;
      wherein the first compartment comprises;
      i. a Cu-salt;
      ii. a further biocide
      wherein the further biocide is a cyclic organic compound comprising a heteroatom selected from the group of O, B, N, S or P, or a combination of at least two thereof in a cycle; and
      wherein the further compartment comprises a polyalkylene ether and:
      a) an amine or a salt thereof wherein the amine comprises a poly-alkylene ether moiety; or
      b) a fatty acid or a salt thereof; or
      c) both (a) and (b), wherein both (a) and (b) are preferred;
         All aspects and embodiments of the invention which have thus far been disclosed; i.e., the composition, the treating composition, the process for producing a treating composition and the kit, also apply to the corresponding features of the timber formulation according to the invention and *vice versa.*
|15|A timber formulation comprising;
   I. a timber, wherein the timber comprises;
      i. a Cu-salt;
      ii. a further biocide, preferably a fungicide;
      iii. a polyalkylene ether and:
         a) an amine or a salt thereof wherein the amine comprises a polyalkylene ether moiety; or
         b) a fatty acid or a salt thereof; or
         c) both (a) and (b), wherein both (a) and (b)are preferred; and
            wherein the weight of components i. to iii. contribute to the final weight of the timber in an amount preferably in the range from 1 x 10⁻¹⁰ to 1.5 wt.%, more preferably in the range from 1 x 10⁻⁸ to 1.0 wt.%" most preferably in the range from 1x10⁻³ to 0.5 wt.-% of the timber.
|16|The timber formulation according to embodiment |15|, wherein the timber has a resin content preferably in the range from 0.5 to 60 wt.-%, more preferably in the range from 1 to 50 wt.-%, most preferably in the range from 5 to 25 wt.-%, each wt.-% based on the weight of the timber.
|17|The timber formulation according to any of embodiments |15| to |16|, wherein the timber is selected from the family of *pinaceae.*
|18|The timber formulation according to any of embodiments 1151 to |17|, wherein the timber comprises sapwood preferably in the range from 10 to 90 wt.-%, more preferably in the range from 20 to 85 wt.-%, most preferably in the range from 30 to 80 wt.-%, each wt.-% based on the total weight of the timber.
|19|The timber formulation according to any of embodiments 1151 to |18|, wherein the timber has a timber surface, wherein the timber surface may have less than one incision defect per cm² of the timber surface, wherein the incision defect has a depth within a range preferably from 0.1 to 10 mm, more preferably from 0.2 to 7 mm, most preferably from 0.5 to 5 mm.
   All aspects and embodiments of the invention which have thus far been disclosed; i.e., the composition, the treating composition, the process for producing a treating composition, the kit and the timber formulation, also apply to the corresponding features of the process for producing a timber formulation according to the invention and *vice versa*.
|20|A process for producing a timber formulation comprising the following process steps:
   I. providing a timber to a vessel;
   II. applying an under-atmospheric pressure (vacuum) to the vessel;
   III. contacting the timber in the vessel with a treating composition according to embodiment |10| or obtained via a process according to embodiments |11| to |13|;
   IV. applying an over-atmospheric pressure to the vessel;
|21|The process according to embodiment |20|, wherein the vacuum is in a range from 0.01 to 0.99 bar, more preferably in a range from 0.03 to 0.95 bar, most preferably in a range from 0.06 to 0.90 bar.
|22|The process according to any of embodiments |20| to |21|, wherein the over-atmospheric pressure is in the range from 1 to 15 bar, more preferably in the range from 3 to 13 bar, most preferably in the range from 7 to 12 bar.
|23|The process according to any of embodiments |20| to |22|, wherein the temperature of the vessel is raised, preferably in the range from 5 to 500 °C, more preferably in the range from 20 to 150 °C, most preferably in the range from 50 to 70 °C.
|24|The process according to any of embodiments |20| to |23|, wherein the temperature, after being raised, is held constant preferably for at least 10 minutes, more preferably for at least 20 minutes, most preferably for at least 30 minutes. It is generally accepted that the increase in temperature does not exceed 50 minutes.
|25|The process according to any of embodiments |20| to |24|, wherein the temperature is in a range preferably from 5 to 500 °C, more preferably from 20 to 150°C, most preferably from 50 to 70 °C.
   All aspects and embodiments of the invention which have thus far been disclosed; i.e., the composition, the treating composition, the process for producing a treating composition, the kit, the timber formulation and the process for producing a timber formulation, also apply to the corresponding features of the construction comprising a timber and *vice versa*.
|26|A construction comprising a timber, wherein the timber is obtained from:
   a. the timber formulation according to any of embodiments |15| to |19|; or,
   b. the process according to any of embodiments |20| to |25|.
|27|The construction according to embodiment |26|, wherein the construction comprises a construction exterior, wherein the construction exterior comprises the timber formulation. The construction exterior is the part of the construction which is subject to weathering.
|28|The construction according to any of embodiments |26| to |27|, wherein the construction exterior surface is of a sawed timber.
   All aspects and embodiments of the invention which have thus far been disclosed; i.e., the composition, the treating composition, the process for producing a treating composition, the kit, the timber formulation, the process for producing a timber formulation and the construction comprising a timber, also apply to the corresponding features of the use of an additive according to the invention and *vice versa,* and, to the use of a timber in a wood comprising product and *vice versa.*
|29|A use of an additive for enhancing the penetration of a treating solution or an active ingredient or both, each comprising a Cu-salt and a further biocide in a timber, wherein the additive, comprises a polyalkylene ether and;
   a) an amine or a salt thereof, wherein the amine comprises a polyalkylene ether moiety; or
   b) a fatty acid or a salt thereof; or
   c) both (a) and (b), wherein both (a) and (b) are preferred.
|30|A use of a timber in a wood comprising product, wherein the timber is obtained from:
   a. the timber formulation according to embodiments |15| to |19|; or,
   b. the process according to any of embodiments |20| to |25|.

The wood comprising product is preferably selected from the group consisting of; construction timber, utility poles, posts, flooring, door and/or window frames, bridges, railway ties, furniture or a combination of at least two thereof.

Each and every one of the above embodiments may be selected and combined in any chosen way. Therefore every possible combination is part of the disclosure of this specification.

### Timber

The timber referred to in the present invention relates to all lignin comprising material generally arising from wood, roots, bushes or other natural sources, preferably wood. The lignin content of said material is preferably in the range from 5 to 50 wt.-%, more preferably in the range from 10 to 40 wt.-% and most preferably in the range from 15 to 35 wt.-%, based on the weight of each said material. The term "timber" comprises all three-dimensional shapes and sizes of wood and/or wood-based products which may be selected from the group comprising, plywood, chipboard, medium-density fibreboard (MDF), particle board, oriented strand board (OSB); wherein the wood-based product comprises at least 30 wt.-% timber, more preferably at least 50 wt.-% timber, most preferably at least 70 wt.-% timber, each wt.-% based on the total weight of the wood-based product. Timber may be sourced from any geographic location. These timbers may be selected from the group comprising; wood that is still attached to the ground, wood that has been felled, wood comprising its bark, wood without its bark, brown timber (and all types within that category), light timber (and all types within that category), red timber (and all types within that category), lumber (and all types and/or grades within that category), or any combination thereof. It is particularly preferred that the wood has already been felled and the bark removed.

Preferred timbers in the context of the invention belong to any hardwood or softwood family, most preferably softwood. The preferred timbers are those comprising both heartwood and sapwood. It is preferred that the untreated timbers contain sapwood in the range of 10 to 90 wt.-% of the timber, more preferably in the range of 20 to 85 wt.-% of the timber and most preferably in the range of 30 to 80 wt.-% of the timber. It is further preferred that the wood belongs to the genus of "*Pinaceae*", most preferably to the family of "*pinus resinosa*". Within the family of *Pinaceae,* the timber may be selected from the group comprising; pine, spruce, fir or a combination of at least two thereof. Thus, any species of wood belonging to the *Pinaceae* family, or combination thereof, is within the scope of the present invention.

It is known that current preservation of timber belonging to the genus "*Pinoideae*" and in particular, red pine (*pinus resinosa*), can involve deformation e.g., incisions, of the surface of the wood, in order to facilitate the uptake and penetration of a timber preservative into the timber. It is an object of the invention to circumvent this requirement and to provide protection to the surface of timber without the need to deform it beforehand, thus, obtaining a superior quality timber surface with at least the same, if not an improved level of protection against fungi and insect attack.

The timber used according to the invention, is exposed to a cutting step before either the application of the composition and/or treating composition according to the invention begins, or the process for producing a timber formulation according to the invention begins. After cutting, the timber is stacked in a suitable orientation. Each stack consists of a plurality of individual timbers in a range preferably from 50 to 600 pieces, more preferably in a range from 100 to 500 pieces, most preferably in a range from 200 to 400 pieces, wherein each piece of timber is itself separated from the closest neighbouring pieces of timber by a vertical distance preferably in a range from 0.1 to 5 cm, more preferably in a range from 0.2 to 3 cm, most preferably in a range from 0.5 to 2 cm; and a horizontal distance preferably in a range from 0.2 to 5 cm, more preferably in a range from 0.3 to 4 cm, most preferably in a range from 0.5 to 1.5 cm. The spacing between each horizontal row is created by inserting smaller pieces (separators) of timber between each row of horizontally stacked timbers. The same technique (i.e., separators) applies to the vertical spacing.

The invention is also suitable for timbers with surface defects, wherein the timber surface may have less than one incision defect per cm² of the timber surface, wherein the incision defect has a depth within a range preferably from 0.1 to 10 mm, more preferably from 0.2 to 7 mm, most preferably from 0.5 to 5 mm.

This invention is concerned with improving both the uptake and penetration of an active ingredient composition into a timber. Timbers used according to the invention may comprise; sapwood, heartwood or a combination of both, they may comprise at least two timbers connected chemically, physically or otherwise, they may comprise an interface wherein at least two timbers are contacted, or any combination thereof. This list is by no means exhaustive.

Another aspect of this invention relates to the use of a timber, wherein the timber is part of a wood-comprising product. The wood comprising product is preferably selected from the group consisting of; construction timber, utility poles, posts, flooring, door and/or window frames, bridges, railway ties, furniture or a combination of at least two thereof.

### Biocides

Generally, biocides are compounds used to prevent and/or reduce the presence and/or growth of unwanted living organisms that attack natural and/or manufactured materials. The terms "biocide" and "biocidal product" are used interchangeably throughout this application. Biocides/biocidal products are defined as;
1. any substance or mixture consisting of, containing or generating one or more active substances, for the purpose of destroying, deterring, rendering harmless, preventing the action of, or otherwise exerting a controlling effect on, any harmful organism;
2. any composition, generated from substances or mixtures which do not themselves fall under point 1, for the purpose of destroying, deterring, rendering harmless, preventing the action of, or otherwise exerting a controlling effect on, any harmful organism.

Examples of biocides include; fungicides, herbicides, pesticides, insecticides, molluscides, acaricides and rodenticides. Biocides are thus preferred for the control of organisms that cause damage to natural and/or manufactured materials, as well as damage to human and/or animal health.

In view of the invention, the selected biocide(s) must be particularly effective against timber-destroying organisms. Said timber-destroying organisms may be any one, or a combination of, the following; wet rot, dry rot, white rot, brown rot, soft rot, insects and/or termites. Fungicides and insecticides would be a preferred choice of biocide according to the invention, wherein fungicides are particularly preferred. Fungicides are biocidal chemical compounds or biological organisms used to kill or inhibit fungi or fungal spores. A fungicide is a specific type of biocide that controls fungal disease by specifically inhibiting or killing the fungus causing the disease, i.e., wet rot, dry rot, white rot, brown rot, soft rot, insects and/or termites.

### Copper Salt - active ingredient

Copper and its compounds e.g., copper salts (Cu-salts) are examples of a biocide. Cu-salts according to the invention are all types of Cu compounds which comprise copper in ionic form. Cu-salts can be obtained synthetically or occur in the earths crust. Cu is known from the art to be used in wood preservatives. Cu-salts according to the invention can be organic or inorganic Cu-salts, wherein inorganic Cu-salts are preferred. Moreover, water-insoluble Cu-salts are preferred, wherein inorganic water-insoluble metal salts are particularly preferred. Cu-salts can be of the Cu(I), Cu(II) or Cu(III) form. Organic Cu-salts are preferably metal organic copper compounds comprising at least two CₓH_{y} moieties wherein x and y can be each independently an integer value of 1, 2 or more, such as CuMe, CuEt, CuPr. Other preferred copper compounds can comprise C_{w}HₓN_{y}O_{z} wherein w can be any integer value in the range preferably from 1-20, more preferably from 2-15, most preferably from 2-11; x can be any integer value in the range preferably from 1-30, more preferably from 3-26, most preferably from 5-23, most preferably from 10-19; y can be any integer value in the range preferably from 0 to 10, more preferably in the range from 1 to 8, most preferably in the range from 1 to 4; and z can be any integer value in the range preferably from 1-6, more preferably from 1-5, most preferably from 1-3. These compounds are preferably of linear or cyclic form, wherein a combination of both is preferred. Preferred compounds comprising this formula include copper naphthenate, copper(II) 2-ethylhexanoate, copper-monoethanolamine (Cu-MEA).

Inorganic Cu-salts preferably comprise an anion selected from the group consisting of CO₃, HCO₃, SOₓ, Cl₂, (NO₃)₂, (OH)₂, CN, or a combination of at least two thereof. Preferred Cu-salts are water-insoluble wherein said Cu-salts may be selected from the group consisting of CuCO₃, Cu(HCO₃)₂, CuHCO₃, Cu(OH)₂•CuCO₃, CuO. Preferred Cu-salts according to the invention are CuCO₃ and Cu(HCO₃)₂, Cu(OH)₂•CuCO₃, wherein Cu(OH)₂•CuCO₃ is particularly preferred and often referred to as basic copper carbonate.

The Cu-salt comprised in the active ingredient composition may be in a liquid phase, wherein the liquid phase can be a solution or dispersion, wherein a solution is preferred. It is preferred that the Cu in the Cu-salt used according to the invention, is present in the form of a Cu-MEA solution wherein, the Cu of the Cu-salt is present in a molar ratio (Cu: MEA) of 1:2-8, more preferably in a molar ratio of 1:2,5-6, most preferably in a molar ratio of 1:3-4.

### Further Biocide - active ingredient

According to the invention, compounds used as a further biocide differ to copper salt. Preferably, these compounds may be any one or a combination of; triazoles, wherein preferred triazole(s) may be selected from the group comprising; propiconazole, tebuconazole, cyproconazole, triadimefon. Preferred compounds used as a further biocide may be any one or a combination of quaternary ammonium salts, wherein the quaternary ammonium salt(s) is selected from the group comprising; didecyl-dimethyl-ammonium-chloride (carbonate), benzalkonium-chloride, methyl-didecyl-polyoxyethyl-ammonium-propionate, betain. Compounds used as a further biocide may be any one or a combination of compounds such as; boric acid, dichloroctyl-isothiazolinone, Cu-HDO, as well as metal compounds. Any of the above disclosed compounds for use as a further biocide e.g., triazoles, quaternary ammonium salts; may be combined in any way or used separately according to the invention. The preferred further biocide according to the invention is fungicide, wherein quaternary ammonium salts e.g., betain, are particularly preferred.

### Cyclic Organic Compound

Cyclic organic compounds consist of a series of atoms which are connected to form a ring. Rings may be of any size and may contain any number of heteroatoms. Preferably rings can contain 3, 4, 5, 6, 7, 8 or 9 atoms, wherein rings with 5 and 6 atoms are preferred. In an embodiment of this invention, each cyclic ring contains preferably between 1-6 heteroatoms (O, B, N, S or P), more preferably 2-5 heteroatoms (O, B, N, S or P), most preferably 3-4 heteroatoms (O, B, N, S or P). A ringed structure may contain a plurality of rings joined together, thus forming a macro-cyclic structure. A preferred macro-cyclic structure may contain from 2-20, preferably 2-10 and more preferably 2-3 rings.

All cyclic organic compounds, in particular aromatic and aliphatic compounds, are considered suitable under the present invention. It is preferred, however, that the cyclic compound used according to the invention, exhibits a degree of delocalization, preferably an aromatic ring structure. The preferred aliphatic cyclic compounds may contain numerous connected cycles, preferably in a range from 2-6 cycles, and more preferably in a range from 2-4 cycles. The cycles may be preferably 3-12 membered rings, more preferably 4-10 membered rings, most preferably 5-8 membered rings. Each cyclic ring contains preferably between 1-6 heteroatoms, more preferably 2-3 heteroatoms. These heteroatoms are preferably selected from the group consisting of O, B, N, S or P or a combination of at least two thereof, wherein, B, N or a combination of at least two thereof is preferred.

It is a preferred embodiment of the invention that the cyclic organic compound comprising a heteroatom selected from the group of O, B, N, S or P or a combination of at least two thereof in a cycle comprised in the composition, has a moiety of the following general formula (I): 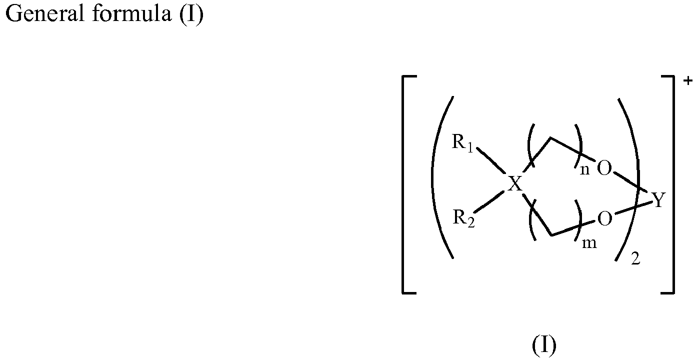 wherein in General formula (I)
- X: is selected from elements; P, N, or B; more preferably N or B, most preferably N;
- Y: is B;
- R₁, R₂: are independently from each other a saturated linear hydrocarbon containing from 1 to 20 C atoms, preferably containing from 5 to 15 C atoms, more preferably containing from 8 to 12 C atoms; and
- n, m: are independently from each other any integer value within the range from 1 to 20. It is preferred that n is an integer in the range from 1 to 20 and m is an integer in the range from 1 to 20, it is more preferred that n is an integer in the range from 1 to 10 and m is an integer in the range from 1 to 10, it is most preferred that n is an integer in the range from 2 to 5 and m is an integer in the range from 2 to 5.

### Betain

Betains, their derivatives, and formulations based on them, are known from the art. Betains are a class of cyclic compound that contain both a cationic functional group and an anionic functional group. Betains may contain one or more cyclic structure. These cyclic structures are connected preferably via a common heteroatom, i.e., they are "Spiro compounds". The number of rings within the overall structure will thus be determined by the valency of the central heteroatom. The included cycles may each independently contain between 3 and 20 atoms, preferably between 4 and 15 atoms, most preferably between 5 and 10 atoms. Quite often there are side-chains connected to the cycles. These side chains are preferably linear hydrocarbons, most preferably saturated linear hydrocarbons comprising a number of C atoms in a range from 1-20 C atoms, more preferably in a range from 5-15 C atoms, most preferably in a range from 8-12 C atoms.

According to the invention, the cyclic organic compound acts as a further biocide and it is selected from the group consisting of a betain or its derivative, or both. A person skilled in the art would be able to select at least one compound from the group consisting of; cocodimethyl amidopropyl betain, decyl betain, alkyl aminobetain, alkyl dimethyl betain, cocamidopropyl betain, glycine betain, alkylpolyethoxy ammonium borate, decylpolyoxyethyl ammonium borate, di-decyl-poly-oxyethyl-ammonium borate (DPAB), N-methacryloyloxyethyl-N, N-dimethyl ammonium-α N-methylcarboxybetain-methacrylic acid alkyl ester copolymer, in order to carry out the invention. The compound di-decyl-poly-oxyethyl-ammonium borate (DPAB) is particularly preferred according to the invention.

According to the invention, the further biocide e.g., DPAB used in the active ingredient composition is present in solution with the Cu-MEA, {wherein the Cu-MEA is as disclosed in the previous section (Copper Salt - active ingredient)} in a molar ratio (Cu: MEA: further biocide) of 1:3-4:1-2.

### Polyalkylene ether compounds

Organic compounds comprising polyalkylene ether moieties are as such well known from the art. The following general formulae (II, III and IV) represent organic compounds comprising at least one polyalkylene ether moiety which may be used according to the invention: 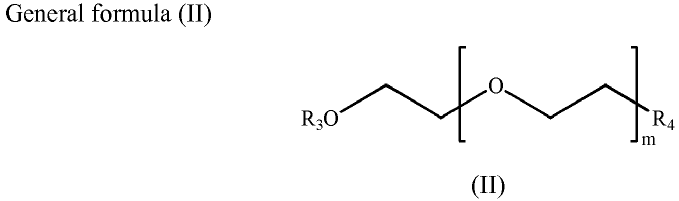 wherein in general formula (II)
- R₃: is H or a saturated linear or branched, preferably branched hydrocarbon, preferably containing 1 to 30 C atoms, more preferably 1 to 15 C atoms, most preferably 6 to 13 C atoms, it is most preferred that R₃ is H;
- R₄: is a saturated linear (including branched and unbranched) hydrocarbon containing 1 to 30 C atoms, more preferably 1 to 15 C atoms, most preferably 6 to 13 C atoms.

According to the invention, at least two further organic compounds are added to the Cu-salt and further biocide (active ingredient composition), preferably prior to any addition of solvent. It is preferred that at least one of the at least two further organic compounds comprises a polyalkylene ether. It is preferred that at least a first further organic compound is of the general formula (II). The second further organic compound preferably comprises an organo-silicon moiety, wherein it is particularly preferred that it is a polymeric organo-silicon moiety. A person skilled in the art would be able to select at least a first organic compound from the group consisting of; poly-ethylene-glycol(n)monomethyl-ether-mono-(succinimidylsuccinate)ester, poly-ethylene-glycol (750)-monomethyl-ether-monocarboxymethyl-ether, poly-(ethylene-glycol(5000)mono methyl ether) activated with cyanuric chlolride, diethylene-glycol-diacrylate, diethylene-glycol-dimethyl-acrylate, dipropylene-glycol-dimethacrylate, diethy-lene-glycol-divinyl-ether, ethylene-glycol-dimethacrylate, poly-ethylene-glycol(n)-diacrylate, poly-ethylene-glycol(n) dimethacrylate, doecyl-poly-ethylene-glycol-ether, triethylene-glycol-diacrylate, triethylene-glycol-dimethacrylate, triethylene-glycol-divinyl ether, wherein dodecyl-poly-ethylene-glycol-ether is preferred, in order to carry out the invention.

A person of skill in the art would be able to select at least one further organic compound from the group consisting of, hexamethylcyclotrisiloxane, octamethyl cyclotetrasiloxane, decamethylcyclopentasiloxane, dodecamethylcyclohexasiloxane, polydimethylsiloxane, decamethyl-tetrasiloxane, octamethyltrisiloxane, hexamethyldisiloxane, wherein polydimethylsiloxane is preferred, in order to carry out the invention. Each of the said preferred compounds (dodecyl-poly-ethylene-glycol-ether and polydimethylsiloxane) are each independently present in the active ingredient composition preferably in an amount in the range from 0.01 to 20 wt.%, more preferably in an amount in the range from 0.5 to 15 wt.-%, most preferably in an amount in the range from 1.00 to 10 wt.-%, each wt.-% is based on the weight of the active ingredient composition. 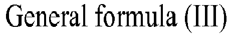 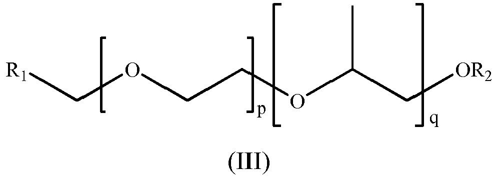 wherein in general formula (III)
- R₁: is a saturated linear or branched, preferably branched hydrocarbon containing 1 to 30 C atoms, more preferably 1 to 15 C atoms, most preferably 5 to 7 C atoms;
- R₂: is H or a saturated linear or branched hydrocarbon, preferably containing 1 to 30 C atoms, more preferably 1 to 15 C atoms, most preferably 6 to 13 C atoms, it is most preferred that R₂ is H;
- p, q: are, independently from each other, an integer value in the range from 1 to 100. It is preferred that p is an integer value in the range from 1 to 100, and q is an integer value in the range from 1 to 100, it is more preferred that p is an integer value in the range from 2 to 60 and q is an integer value in the range from 2 to 60, it is most preferred that p is an integer value in the range from 3 to 15 and q is an integer value in the range from 3 to 15.

A person of skill in the art would be able to select a suitable compound according to the general formula (III), comprising a polyalkylene ether, from the following group comprising; polyalkylene glycol monobutyl ether, polyethylene glycol monomethyl ether acetoacetate, poly-ethylene glycol hexanoic acid ester methyl ether, n-ethylhexanol-propylen-ethylenglycol ether, n-propylhexanol-propylen-ethyleneglycol ether, n-butylhexanol-propylen-ethyleneglycol ether, n-pentylhexanol-propylen-ethyleneglycol ether, n-heptylhexanol-propylen-ethylenglycol ether, n-propylbutanol-propylen-ethyleneglycol ether, n-butylbutanol-propylen-ethyleneglycol ether, n-pentylbutanol-propylen-ethyleneglycol ether, n-hexylbutanol-propylen-ethyleneglycol ether, n-heptylbutanol-propylen-ethylenglycol ether, propylene-glycol-mono-n-butyl-ether, ethylene -glycol-mono-propyl-ether, ethylene-glycol-mono-hexyl-ether, propylene-glycol-mono-propyl -ether, wherein n can be any integer value in the range from 1 to 4, more preferably 1 to 3, most preferably, 1 to 2, wherein the compound 2-ethyl-hexanol-propylen-ethylen glycol ether is most preferred according to the invention. 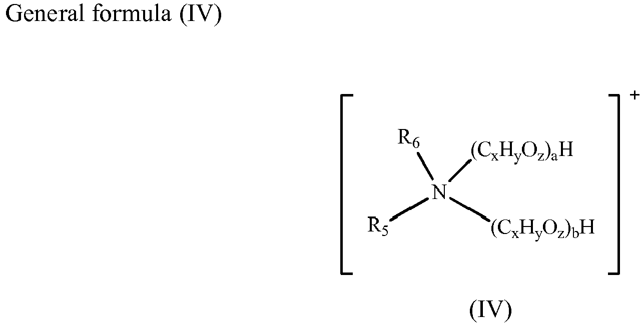 wherein in general formula (IV)
- R₅, R₆: is a saturated linear or branched, preferably branched, hydrocarbon containing 1 to 30 C atoms, more preferably 1 to 15 C atoms, most preferably 2 to 12 C atoms, wherein the hydrocarbon may also comprise a heteroatom selected from the group of O, N or S, or a combination thereof, preferably N, more preferably an amine moiety;
- x, y, z: are each independently an integer value in the range from 1 to 100, more preferably in the range from 2 to 60, most preferably in the range from 3 to 20;
- a, b: are each independently from each other any integer value within the range from 1 to 100. It is preferred that a is an integer in the range from 1 to 100 and b is an integer in the range from 1 to 100, it is more preferred that a is an integer in the range from 2 to 30 and b is an integer in the range from 2 to 30, it is most preferred that a is an integer in the range from 3 to 15 and b is an integer in the range from 2 to 15.

It is preferred according to the invention that the compound according to the general formula (IV) is an amine or a salt thereof, wherein the amine comprises a polyalkylene ether moiety. A person of skill in the art would be able to select a suitable compound from at least the following group of; cocoalkylbis(2-hydroxyethyl) ethoxylated methylammonium chloride, cocobis(2-hydroxy propyl)benzyl ammonium chloride, cocotrimethylammonium chloride, cocoalkylme-thyl polyoxyethylene ammonium chloride, octadecylmethyl polyoxyethylene ammonium chloride, cocoalkylmethylbis-(2-hydroxyethyl)-ammonium chloride, oleylmethylbis-(2-hydroxy ethyl)-ammonium chloride, benzylbis-(2-hydroxyethyl)-cocoalkyl ammonium chloride, poly-oxyethylene-(15)-tallow amine, cocoalkyl-N,N-polyoxethylen-(9.15)-amine, N,N,N-polyoxy ethylene-(12)-N-tallow-1,3-diaminopropane. It is further preferred that the amine or salt thereof, contains ethylene oxide (EO) preferably in an amount in the range from 1 to 30 mol EO, more preferably in the range from 4 to 20 mol EO, most preferably in the range from 7 to 11 mol EO. In view of this, cocoalkyl-N,N-polyoxethylen-(9.15 EO)-amine would be a preferred choice of compound.

### Additive composition

According to the invention, an additive is administered to the active ingredient composition comprising the Cu-salt, the further biocide and the at least two further organic compounds. It is preferred, according to the invention that the additive is a composition comprising a poly-alkylene ether, and; an amine or a salt thereof wherein the amine comprises a polyalkylene ether moiety, or, a fatty acid or a salt thereof, or, both, wherein the presence of both is particularly preferred. These compounds each independently comprise moieties according to the general formulae (III) to (V) wherein general formulae (III) and (IV) are as previously described. General formula (V) is represented as: 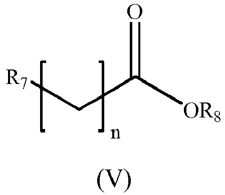 wherein in general formula (IV)
- R₇: is H or a saturated or unsaturated linear (including branched and unbranched) hydrocarbon containing 1 to 30 C atoms, more preferably 1 to 15 C atoms, most preferably 1 to 2 C atoms;
- R₈: is H or a linear (including branched and unbranched) hydrocarbon or a salt, wherein the hydrocarbon preferably contains 1 to 30 C atoms, more preferably 1 to 15 C atoms, most preferably 6 to 13 C atoms, it is most preferred that R₈ is H;
- n: is an integer value in the range from 1 to 50, more preferably in the range from 2 to 20, most preferably in the range from 5 to 9.

It is preferred that the compound according to general formula (V) is unsaturated, is preferably a C₅ to C₃₀ carboxylic acid, more preferably a C₇ to C₁₅ carboxylic acid, most preferably a C₉ to C₁₁ carboxylic acid or a salt thereof. A person of skill in the art may select any unsaturated carboxylic acid or salt thereof within this group. The examples contained within the specification, refer to undecylenic acid. It is further preferred that the additive composition is prepared by contacting compounds according to general formulae (III) and (V) first, and then adding the compound according to general formula (IV) in order to obtain the additive composition.

### Treating solution

The treating solution according to the invention comprises the active ingredient. The treating solution comprises or essentially consists of a Cu-salt, a further biocide, at least one further organic compound, preferably, at least two further organic compounds, and an aqueous solvent in an amount of at least 50 wt.-%, more preferably at least 60 wt.-%, most preferably at least 70 wt.-%. All weights and % values previously disclosed regarding these constituents, apply equally to the treating solution.

It is preferred that two organic compounds are added to the Cu-salt and the further biocide prior to contact with the solvent. It is preferred that at least one organic compound comprises a heteroatom selected from the group of O, N, S, Si or a combination of at least two thereof, more preferably O, N, Si, most preferably O, Si. It is preferred that both organic compounds each independently comprise a polymeric moiety, wherein one compound comprises preferably a poly-alkylene-glycol moiety and the second compound comprises preferably a polyalkyl moiety. The compounds polydimethylsiloxane and dodecyl-poly-ethylene-glycol-ether are the most preferred further organic compounds according to the invention.

The aqueous solvent used according to the invention is preferably a polar protic solvent, wherein water is particularly preferred. Furthermore, the solubility of the constituents in the composition could be enhanced by appropriate enhancers. These enhancers may be selected from the group consisting of; surfactants, soaps, detergents, or a combination of at least two thereof. It is preferred that the aqueous solvent comprises at least 50 wt.-% water, more preferably comprises at least 60 wt.-% water, most preferably comprises at least 70 wt.-% water, wherein the wt.-% is based on the total weight of the treating solution.

Preferably, the active ingredient composition is present in the treating solution in an amount in the range from 0.01 to 30 wt.-%, more preferably in an amount in the range from 0.05 to 15 wt.-%, most preferably in an amount in the range from 0.50 to 5.00 wt.-%, each wt.-% based on the total weight of the treating solution.

### Treating composition

The treating composition according to the invention comprises a treating solution and an additive. The treating composition comprises as constituents;
a. a Cu-salt;
b. a further biocide, preferably a fungicide;
c. an additive;
   wherein the additive comprises a polyalkylene ether and:
   i. an amine or a salt thereof wherein the amine comprises a poly-alkylene ether moiety; or
   ii. a fatty acid or a salt thereof; or
   iii. both (i.) and (ii.), wherein both (i.) and (ii.) are preferred;
d. an aqueous solvent in an amount of preferably at least 50 wt.-%, more preferably at least 60 wt.-%, most preferably at least 70 wt.-%, each wt.-% based on the total weight of the treating composition.

The treating composition according to the invention preferably comprises the treating solution, as described above (comprising a Cu-salt, a further biocide, at least one further organic compound, preferably at least two further organic compounds, and an aqueous solvent in an amount of at least 50 wt.-%) and the additive composition, as described above (comprising a polyalkylene ether and; (i.) an amine or a salt thereof wherein the amine comprises a poly-alkylene ether moiety, or, (ii.) a fatty acid or a salt thereof, or, both (i.) and (ii.), wherein both are preferred)..

The addition of the additive composition to the treating solution produces the treating composition according to the invention. It is preferred that the additive composition is added to the treating solution in an amount in the range from 0.01 to 50 wt.-%, more preferably in the range from 0.05 to 30 wt.-%, most preferably in the range from 0.08 to 10 wt.-% (each wt.-% based on the total weight of the treating composition). It is further preferred that the Cu of the Cu-salt is present in the treating composition in a weight ratio to the additive preferably in the range from 0.1 to 5, more preferably in the range from 0.15 to 4, most preferably in the range from 0.2 to 3.

It is preferred that the Cu of the Cu-salt is present in the treating composition in a weight ratio to the polyalkylene ether comprised in the additive (Cu:polyalkylene ether), in the range from 0.1 to 30, more preferably in the range from 0.5 to 20, most preferably in the range from 0.9 to 14.

It is preferred that the Cu of the Cu-salt is present in the treating composition in a weight ratio to the amine or a salt thereof, wherein the amine comprises a polyalkylene ether moiety, comprised in the additive, (Cu:amine), in the range from 0.1 to 30, more preferably in the range from 0.2 to 20, most preferably in the range from 0.6 to 15.

It is preferred that the Cu of the Cu-salt is present in the treating composition in a weight ratio to the fatty acid or salt thereof, comprised in the additive, (Cu:fatty acid), in the range from 50 to 2500, more preferably in the range from 100 to 2000, most preferably in the range from 130 to 1500.

All numerical ranges already disclosed regarding the constituents, e.g., the Cu-salt, apply equally to the treating composition.

### Process for producing a treating composition

The treating composition according to the invention can be used as a timber preservative. It may used as part of a timber treatment, or may be used as part of a timber formulation which is used as part of a timber treatment. The process for producing a treating composition according to the invention comprises the following process steps;
I. providing an active ingredient composition comprising;
   i. a Cu-salt,
   ii. a further biocide;
II. providing an additive composition differing from the active ingredient composition, wherein the additive composition comprises a polyalkylene ether and;
   a) an amine or a salt thereof, wherein the amine comprises a poly-alkylene ether moiety; or
   b) a fatty acid or a salt thereof; or
   c) both (a) and (b), wherein both (a) and (b) are preferred;
III. contacting the active ingredient composition (I.) with the additive composition (II.);
   wherein an aqueous solvent in an amount of at least 50 wt.-%, more preferably at least 60 wt.-%, most preferably at least 70 wt.-%, is added to components (i.) and (ii.) of process step I. to give a treating solution, prior to mixing the active ingredient composition (I.) with the additive composition (II.).
   All mixing and/or contacting processes according to this invention occur under conditions of constant stirring and atmospheric pressure, in order to obtain the treating composition according to the invention.

### Kit

The kit according to the invention comprises a first and a further compartment. The first compartment of the kit comprises an active ingredient composition comprising;
i. a Cu-salt; and
ii. a further biocide;
wherein the further biocide is a cyclic organic compound comprising a heteroatom selected from the group of O, B, N, S or P, or a combination of at least two thereof in a cycle. The first compartment comprises the active ingredient composition of the kit.

The further compartment of the kit contains an additive composition differing from the active ingredient composition, wherein the additive composition comprises a polyalkylene ether and:
a. an amine or a salt thereof wherein the amine comprises a poly-alkylene ether moiety; or
b. a fatty acid or a salt thereof; or
c. both (a.) and (b), wherein both (a.) and (b.) are preferred;
wherein the Cu of the Cu-salt in the first compartment is present in a weight ratio to the further compartment in the range from 0.1 to 5, more preferably in the range from 0.15 to 4, most preferably in the range from 0.2 to 3.

It is preferred according to the invention, that at least one further organic compound is added to the first compartment, it is even more preferred that at least two further organic compounds are added to the first compartment. It is preferred that both organic compounds each independently comprise a polymeric moiety, wherein one compound comprises preferably a poly-alkylene-glycol moiety and the second compound comprises preferably a polyalkyl moiety. It is preferred that at least one of the at least two further organic compounds comprises a poly-alkylene ether. It is preferred that this compound is of the general formula (II). The second further organic compound preferably comprises an organo-silicon moiety, wherein it is particularly preferred that it is a polymeric organo-silicon moiety. The compounds dodecyl-poly-ethylene-glycol-ether and polydimethylsiloxane are, according to the invention, most preferred. Said compounds are each independently present in the first compartment preferably in an amount in the range from 0.01 to 20 wt.%, more preferably in an amount in the range from 0.50 to 15 wt.-%, most preferably in an amount in the range from 1.00 to 10 wt.-%.

All range values previously disclosed in relation to the active ingredient/additive composition, also apply to the corresponding constituents of the kit.

One example of a kit according to the invention consists of a pallet, whereon the at least two compartments such as kegs, barrel, bottles or buckets are situated. It is preferred that one of the at least two compartments contains the Cu-salt and the further compartment contains the additive. The addition of the further compartment to the first compartment renders the timber preservative which can then be used as a timber treatment or as part of a timber treatment.

### Process for producing a timber formulation

The process for producing a timber formulation according to the invention comprises the following process steps;
a. providing a timber to a vessel, preferably a timber which comprises sapwood in the range from 10-90 wt.-%, more preferably in the range from 20-85 wt.-%, most preferably in the range from 30-80 wt.-%, each wt.-% based on the weight of the timber, wherein the wt.-% values can apply to both softwood or hardwood timbers. It is preferred that the heartwood content is less than 20 wt.-% of the timber, more preferably less than 15 wt.-% of the timber, most preferably less than 10 wt.-% of the timber;
b. applying an under-atmospheric pressure (vacuum) to the vessel, preferably in the range from 0.01 bar to 0.99 bar, more preferably in the range from 0.03 to 0.95 bar, most preferably in the range from 0.06 to 0.90 bar;
c. contacting the timber in the vessel with a treating composition comprising as constituents:
   i. Cu-salt;
   ii. a further biocide;
   iii. an additive;
      wherein the additive comprises a polyalkylene ether and:
      a. an amine or a salt thereof wherein the amine comprises a polyalkylene ether moiety; or
      b. a fatty acid or a salt thereof; or
      c. both (a.) and (b.), wherein both (a.) and (b.)are preferred;
d. applying an over-atmospheric pressure to the vessel in order to reduce the amount of the solvent in the contacted timber, wherein the over-atmospheric pressure lies preferably in the range from 1 to 15 bar, more preferably in the range from 3 to 13 bar, most preferably in the range from 7 to 12 bar;
   wherein the weight of components i. to iii. contribute to the final weight of the timber in an amount in the range of 1 x 10⁻⁵ to 1.5 wt.-% of the timber, more preferably in the range from 1 x 10⁻⁸ to 1.0 wt.% of the timber, most preferably in the range from 1 x 10⁻³ to 0.5 wt.-% of the timber.

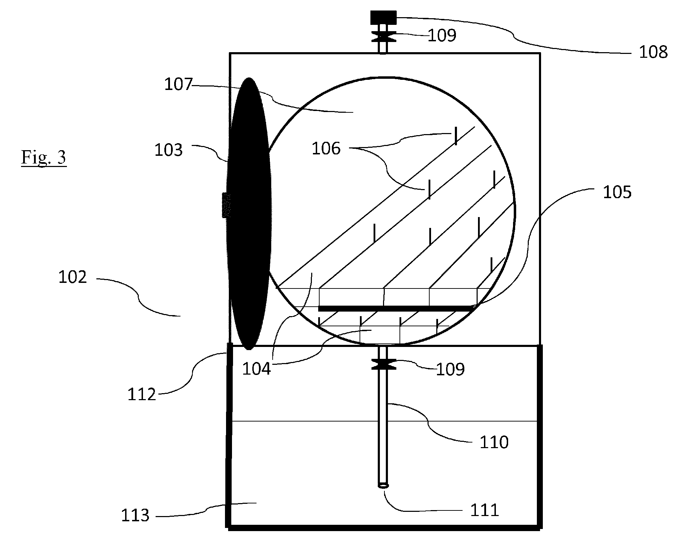

Initially, the timber is exposed to a vacuum preferably in the range from 0.01 to 0.99 bar, more preferably in the range from 0.03 to 0.95 bar and most preferably in the range from 0.06 to 0.90 bar. The timber is exposed to this vacuum for a time period ranging from 5 to 500 minutes, more preferably from 10 to 250 minutes, most preferably from 20 to 100 minutes. Upon completion of this initial treatment step, the treating composition according to the invention is sucked into the vessel. This uptake of composition is controlled by at least one valve mechanism, preferably at least two valve mechanisms which are connected to a cylindrical tubing positioned within the vessel (see figure 3). No more than 5 valve mechanisms are used. The next stage in treatment requires the pressure in the vessel to be increased, preferably in the range from 1 to 15 bar, more preferably in the range from 3 to 13 bar, most preferably in the range from 7 to 12 bar. It is further preferred that this pressure increase is held for a time period ranging from 10 to 1000 minutes, more preferably ranging from 20 to 500 minutes, most preferably ranging from 50 to 150 minutes. It is also preferred, according to the invention, that the temperature of the vessel is raised during the contacting process. Generally the vessel temperature can lie in a range from 5 to 500 °C, more preferably in a range from 20 to 150 °C, most preferably in a range from 50 to 70 °C. It is further preferred that the temperature, after being raised, is held constant for at least 10 minutes, more preferably for at least 20 minutes, most preferably for at least 30 minutes. Generally the increase in temperature does not exceed 50 minutes.

The treating composition used during the process according to the invention preferably contains an aqueous solvent in an amount in the range of at least 50 wt.-%, more preferably at least 60 wt.-%, most preferably at least 70 wt.-%. It is preferred that the treating composition comprises the active ingredient composition in an amount in the range preferably from 0.01 to 30 wt.-%, more preferably in an amount in the range from 0.05 to 15 wt.-%, most preferably in an amount in the range from 0.5 to 5 wt.-%, each wt.-% based on the total weight of the treating composition. It is preferred that the additive composition is present in the treating composition in an amount in the range from 0.01 wt.-% to 50 wt.-%, more preferably in the range from 0.05 wt.-% to 30 wt.-%, most preferably in the range from 0.08 wt.-% to 10 wt.-%, each respective wt.-% based on the total weight of the treating composition.

At the end of the contacting process, the pressure and temperature are reduced to ambient conditions and the treating composition according to the invention or obtained from the process according to the invention is removed from the vessel. The impregnated timbers are dried at ambient temperature. The exterior surroundings of the vessel during the treatment process are preferably subjected to normal atmospheric conditions.

### Vessel

The vessel used according to the invention is preferably used for the purpose of reducing the amount of solvent present in the composition and to achieve a dried contacted timber. The vessel is preferably a metal chamber, wherein the metal can be of pure or alloy form. The chamber according to the invention can be comprised of at least one of the materials selected from the group consisting of iron, copper, zinc, nickel, aluminum, tin, titanium, niobium, or alloys of at least any one metal thereof. Alloys of iron are particularly preferred. It is also preferred that the chamber can be sealed, and is preferably capable of withstanding high pressures. It is further preferred that the chamber has a circular or rectangular cross section, with circular being most preferred. There is at least one point of entry into the vessel for the timbers to be placed inside and subsequently treated with preferably both under-atmospheric (vacuum) and over-atmospheric pressure.

The vacuum applied to the interior of the vessel ranges preferably from 0.01 to 0.99 bar, more preferably from 0.03 to 0.95 bar, most preferably from 0.06 to 0.90 bar. The vacuum is applied to the timber for no longer than 100 minutes.

The over-atmospheric pressure applied to the interior of the vessel preferably ranges from 1 to 15 bar, more preferably from 3 to 13 bar, most preferably from 7 to 12 bar. It is preferred that the over-atmospheric pressure exposure lasts no longer than 500 minutes. The exterior of the vessel is preferably subjected to normal atmospheric pressure and temperature.

### Construction

It is an object of the invention to provide a timber formulation that can be used in a wood comprising product which can be further used for various construction purposes.

Another object of this invention is to provide a timber formulation that gives an improved mechanical stability to the timber when used in a wood comprising product or construction comprising said wood comprising product.

The construction preferably comprises a construction exterior, wherein the construction exterior comprises the timber formulation and is also the part of the construction which is subject to weathering. The construction can also be contained and thus shielded from weathering, however, it may be exposed to other pressures.

Constructions according to the invention are not limited to constructions that use only timber. Timbers according to this invention can be applied to constructions that use timber as a starting or base material in combination with other materials. Such constructions and uses thereof, can range from the commercial to the domestic market. Said constructions are preferably selected from the group consisting of; construction timber, utility poles, posts, flooring, door and/or window frames, bridges, railway ties, furniture or any combination thereof.

### DESCRIPTION OF DRAWINGS

The drawings are for illustrative purposes only, they are not a scale representation of the invention, nor are they to be considered as limiting the scope of the invention. The figures show in:
- Figure 1: a process flow diagram of the process for producing a composition according to the invention;
- Figure 2: a schematic drawing showing the exterior of a vessel and compartment used according to the invention;
- Figure 3: a schematic drawing of an open vessel with compartment comprising the treating composition according to the invention;
- Figure 4: a schematic representation of the timber surfaces that this composition can be applied to.

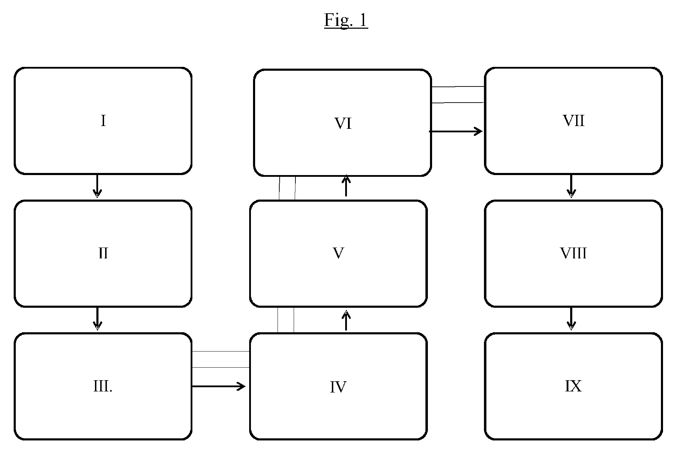

Figure 1, is a process flow diagram describing the complete process according to the invention, starting from the preparation of the treating composition through to obtaining a contacted timber.
   I. providing a timber
   II. preparing a treating composition comprising;
      i. a Cu-salt;
      ii. a further biocide;
      iii. an additive;
         wherein the additive comprises a polyalkylene ether and;
         a. an amine or a salt thereof wherein the amine comprises a polyalkylene ether moiety; or
         b. a fatty acid or a salt thereof; or
         c. both (a.) and (b.), wherein both (a.) and (b.) are preferred;
      iv. an aqueous solvent in an amount of at least 50 wt.-%, more preferably at least 60 wt.-%, most preferably at least 70 wt.-%
   III. placing the timber, appropriately spaced via separators, in a vessel;
   IV. applying a vacuum of 0.1 bar to the vessel for 30 minutes at 25 °C;
   V. introducing the treating composition of (II.) to the vessel;
   VI. applying an over-atmospheric pressure of 10 bar to the vessel for 90 minutes at 25°C in order to obtain a contacted timber;
   VII. returning the pressure to a normal ambient pressure;
   VIII. removal of treating composition (II.) from the vessel;
   IX. drying the contacted timber at ambient temperature.

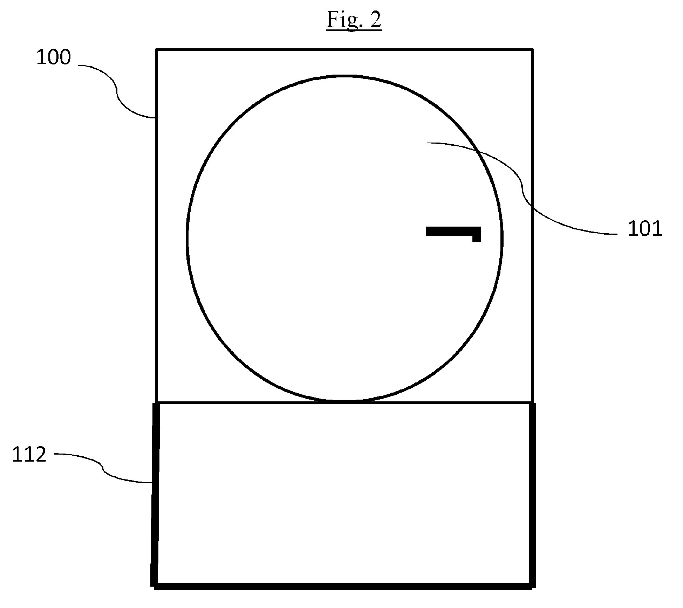

Figure 2 shows a vessel 100 closed by a door 101 situated above a compartment 112.
Figure 3 shows a vessel under working conditions 102 with an open door 103 allowing an interior view 107 of both the vessel 100 and compartment 112. Inside the vessel 107 are timbers 104, with said timbers 104 being separated horizontally by a separator 105 and vertically by separators 106. The vessel 100 is positioned above compartment 112 wherein the treating composition according to the invention 113 is stored during the treatment process. The treating composition 113 is transported into the vessel 100 via an opening 111 in the cylindrical tubing 110 positioned within the vessel 100, wherein said cylindrical tubing 110 comprises two valve mechanisms 109 and a seal 108. By adjusting the valve mechanisms 109 and the pressure applied to the interior of the vessel 107, the treating composition 113 is transported from the compartment 112, to the interior of the vessel 107 and the timbers 104 are treated.

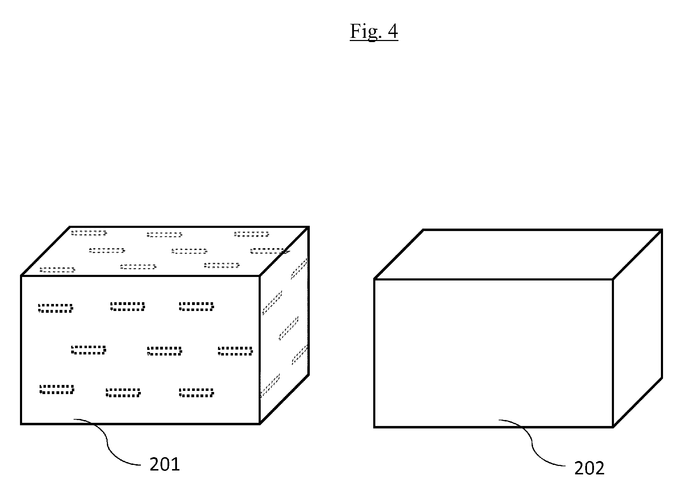

Figure 4 is a representation of the timber surfaces suitable for use according to this invention; 201 shows a timber with surface deformations (i.e. incisions) and 202 shows a timber with a non-deformed surface.

### EXAMPLES

This invention is now explained by means of examples which are intended for illustration purposes only and are not to be considered as limiting the scope of the invention. The application method used for contacting the timber with the prepared compositions referred to in the following examples, is as previously described (see "process for producing a timber formulation" and "description of drawings"). The timbers prepared according to the invention and the examples described herein, are for illustration purposes only. There are numerous possible combinations of reaction conditions applicable to this invention. The selected examples are chosen to give a general, yet detailed description of results and are not to be considered as limiting the scope of the invention.

Timbers were tested according to the internationally recognized standards,
a) EN599 - Durability of wood and wood-based products - Efficacy of preventive wood preservatives as determined by biological tests.
b) EN113 - Test method for determining the protective effectiveness against wood destroying basidiomycetes. Determination of the toxic values.
c) EN252 - Field test method for determining the relative protective effectiveness of a wood preservative in ground contact.
d) ENV807 - Determination of the effectiveness against soft rotting micro-fungi and other soil inhabiting micro-organisms.

### Preparation of treating composition

The treating composition according to the invention may be prepared by diluting a composition comprising both the active ingredient and the additive composition, or by diluting the active ingredient and then adding the additive composition, wherein the latter method of preparation is described in further detail below.

### Solution I - active ingredient composition

At room temperature, to a solution comprising; 10 wt.-% copper in mono-ethanolamine (MEA) (sourced from Adchem, 695 Burk Road 3123 Hawthorn East, Victoria, Australia Link-son Street 5417 Burra Australia) and 10 wt.-% betain (sourced from Clariant GmbH, Industriestrasse 1, 84508 Burgkirchen), was added two further organic compounds; 2.2 wt.-% polydimethylsiloxane and 5 wt.-% dodecyl-poly-ethylene-glycol-ether (CAS 9043-30-5). Each wt.-% based on the weight of the solution. The solution was stirred. Solution I will be referred to in tables 1 to 5 as the "active ingredient (A.I.)".

### Solution II - additive composition

At room temperature, under vigorous stirring, 0.001 wt.-% (0.35 g/1.899 x10⁻³ mol) undecylenic acid (CAS 112-38-9) was added to 0.087 wt.-% (43.3 g/0.1866 mol) of 2-ethyl-hexanol-propylen-ethylen glycol ether (CAS 64366-70-7) until a clear solution was observed. Once a clear solution was obtained, 0.113 wt.-% (56.35 g/0.0791 mol) cocosalkyl-N,N-polyoxethylen-(9,15 EO)-amine was slowly added. Solution II shall be referred to in the examples as the "additive".

The treating composition may be prepared using any concentration of treating solution. Tables 1 and 2 detail the various concentrations of the active ingredient in solution, i.e., the treating solution, and the corresponding amounts of the additive composition. The additive composition is further broken down into the individual amounts of each respective constituent. Table 1 gives weights and Table 2 gives the molar equivalent of the additive constituents present. A skilled person would be able to take any of these concentrations and dilute further to reach a desired strength of treating composition.

**Table 1**

| Concentrations used in making the treating composition by weight | | | | | |
|---|---|---|---|---|---|
| Ex.# | Strength of treating solution *[g A.I.*/*kg solution]* | Amount of additive composition in active ingredient composition *[g]* | Additive composition *[g]* | | |
| | | | 2-ethyl-hexanol-propylen-ethylene glycol ether | cocosalkyl-N,N-polyoxethylen-(9,15 EO)-amine | undecylenic acid |
| 1 | 10 | 200.00 | 86.60 | 112.70 | 0.70 |
| 2 | 20 | 100.00 | 43.30 | 56.35 | 0.35 |
| 3 | 30 | 66.70 | 28.87 | 37.57 | 0.23 |
| 4 | 50 | 40.00 | 17.32 | 22.54 | 0.14 |
| 5 | 100 | 20.00 | 8.66 | 11.27 | 0.07 |

| | | | | | |
|---|---|---|---|---|---|
| A.I.: the active ingredient composition: a Cu-salt of the Spieß Urania GmbH, Germany, and polymeric Betain of Rütgers Organics GmbH, Germany, as further biocide. Treating solution: comprises A.I and solvent | | | | | |

**Table 2**

| Concentrations of the treating composition in Mol | | | | | |
|---|---|---|---|---|---|
| Ex.# | Strength of treating solution *[g A.I.*/*kg solution]* | Amount of additive composition in active ingredient composition *[g]* | Additive composition *[mol]* | | |
| | | | 2-ethyl-hexanol-propylen-ethylene glycol ether | cocosalkyl-N,N-polyoxethylen-(9,15 EO)-amine | undecylenic acid |
| 1 | 10 | 200.00 | 0.3733 | 0.1583 | 0.0038 |
| 2 | 20 | 100 | 0.1866 | 0.0791 | 0.001899 |
| 3 | 30 | 66.70 | 0.1244 | 0.0528 | 0.0013 |
| 4 | 50 | 40.00 | 0.0747 | 0.0317 | 0.0008 |
| 5 | 100 | 20.00 | 0.0373 | 0.0158 | 0.0004 |

| | | | | | |
|---|---|---|---|---|---|
| A.I.: the active ingredient composition: the Cu-salt of the Spieß Urania GmbH, Germany, and polymeric Betain of Rütgers Organics GmbH, Germany, as further biocide. Treating solution: comprises A.I and solvent | | | | | |

These tables are intended to serve as examples of possible combinations of the active ingredient composition and the additive composition. They are in no way intended as limitations on the scope of this invention. Any and all possible combinations/concentrations are thus encompassed within this invention. The method used in preparing Example 1 is explained in further detail below.

Once both solutions (I and II) were prepared, 2 kg of solution I (A.I.) was added to 98 kg of water, resulting in a 2 % treating solution. 0.2 wt.-% of solution II (additive) was then added to the treating solution in order to obtain the treating composition. Each wt.-% value is based on the weight of the treating composition.

Table 3 gives the breakdown in wt.-% of the additive constituents in the final treating composition described above:

**Table 3**

| Treating composition | | | | |
|---|---|---|---|---|
| Strength of treating solution [%] | Total amount of additive used [%] | Amount of additive constituents [%] | | |
| | | 2-ethylhexanol-propylene-ethylene-glycolether | cocosalkyl-N,N-polyoxethylen-(9,15 EO)-amine | undecylenic acid |
| 2 | 0.2 | 0.0866 | 0.1127 | 0.0007 |

| | | | | |
|---|---|---|---|---|
| A.I.: active ingredient:Cu-salt of the Spieß Urania GmbH, Germany, and polymeric Betain of Rütgers Organics GmbH, Germany, as further biocide. Treating solution: A.I and solvent | | | | |

The treating composition may also be obtained by the following method; preparing a composition comprising the active ingredients as above described in solution I. To this solution, is added the additive composition, wherein the amounts of each constituent is as described in Table 3. To this composition, a solvent may be added in an amount in the range from 50 wt.-%, more preferably in the range from 60 wt.-%, most preferably in the range from 70 wt.-%.

### Preparation of timbers using the treating composition

Timber was positioned in a treating vessel. Over a period of 30 minutes, a pressure of 0.1 bar was applied. The treating composition according to Example 2 was sucked into the vessel. The pressure of the vessel was increased to 10 bar at 25 °C for 90 minutes. Afterwards, the pressure was set to ambient pressure and the remainder of the treating composition was removed from the vessel. The contacted timber was dried at ambient temperature and weighed. The values in tables 4, 5 and 6 are obtained by measuring the changes in weights of the various species of wood.

Tables 4 to 7 detail the results obtained following the application of the Example 2-treating composition to a timber. Parameters including uptake, penetration and durability were observed.

Table 4 details the effect of uptake [1/m³] and penetration rate [%] in Nordic pine. The results show the effect of; Nordic pine with only the treating solution present, Nordic pine with the treating solution and a polyalkylene ether present (2-ethyl-hexanol-propylen-ethylene glycol ether), Nordic pine with a polyalkylene ether and amine present (2-ethyl-hexanol-propylen-ethylene glycol ether and Cocosalkyl-N,N-polyoxethylen- (9,15 EO)-amine), Nordic pine with a polyalkylene ether and a fatty acid present (2-ethyl-hexanol-propylen-ethylene glycol ether and undecylenic acid) and Nordic pine with a polyalkylene ether, an amine and a fatty acid present (2-ethyl-hexanol-propylen-ethylene glycol ether, Cocosalkyl-N,N-polyoxethylen-(9,15 EO)-amine and undecylenic acid).

**Table 4**

| | | Additive composition | | | Uptake [l/m³] | Penetration rate [%] |
|---|---|---|---|---|---|---|
| Wood | Treating solution | 2-ethyl-hexanol-propylen-ethylene glycol ether | Cocosalkyl-N,N-polyoxethylen-(9,15 EO)-amine | Undecylenic acid | | |
| Nordic pine | ± | - | - | - | 48 | 2 |
| | ± | ± | - | - | 123 | 25 |
| | ± | ± | ± | - | 215 | 47 |
| | ± | ± | - | ± | 204 | 42 |
| | ± | ± | ± | ± | 425 | 88 |

**Table 5**

| **Wood** | **Uptake of treating solution [l/m³] - without additive** | **Uptake of treating composition [l/m³] - with additive** | **Impact on uptake [%]** |
|---|---|---|---|
| Nordic pine | 371 | 425 | 15 |
| Red pine | 624 | 672 | 8 |
| Spruce | 178 | 196 | 10 |
| Glue-lam (pine) | 94 | 158 | 68 |
| Spruce/larch | 189 | 214 | 13 |

Table 5 shows that with the treating composition, the level of uptake is improved for each species of wood including pine (Nordic, Red, pines contacted with Glue-lam), spruce and larch, with a corresponding improvement in the impact on uptake (%). It shows that the treating solution and the treating composition, both having the same amount of active ingredient present, gives an improvement in the uptake of the active ingredient in the various species of wood. Table 6 gives further details on the penetration rate of the treating composition.

**Table 6**

| **Wood** | **Penetration rate of treating solution [%] - without additive** | **Penetration rate of treating composition [%] - with additive** | **Impact on penetration [%]** |
|---|---|---|---|
| Nordic pine | 72 | 88 | 22 |
| Red pine | 76 | 86 | 13 |
| Spruce | - | - | - |
| Glue-lam (pine) | 39 | 49 | 25 |
| Spruce/larch | - | - | - |

The penetration rate was observed only for species of pine. Values were not able to be determined for spruce and larch. Table 6 shows that with the treating composition, there is a better performance in terms of penetration rate, with the most significant improvement observed for Nordic and Red pine. It shows that the treating solution and the treating composition, both having the same amount of active ingredient present, gives an improvement in the penetration of the active ingredient in the various species of wood.

Looking at tables 5 and 6, Red pine benefits most from the treating composition, in terms of both uptake and penetration rate, followed by Nordic pine and both glue-lam pines thereafter. From these observations, it can be stated that the treating composition according to the invention is suitable for use as a timber preservative on pine, spruce and larch species of timber, with all three species displaying an improvement in the uptake of the treating composition. However, the effect of improved penetration is most clearly seen in pine.

**Table 7**

| **Timber** | **Active ingredient** | **Additive** | **Incision** | **Penetration** | **Durability** |
|---|---|---|---|---|---|
| Red pine | + | - | + | - | ++ |
| Red pine | + | + | - | ++++ | ++++ |

Table 7 shows that the presence of both the active ingredient composition and the additive composition (i.e. the treating composition according to the invention), gives significantly improved penetration and durability when applied to the surface of a red pine timber, wherein the surface has no incisions/defects, compared to the surface of a red pine timber with incisions/defects. This is an unexpected result and shows that the surface of red pine does not need to be damaged in order for the treating solution and/or the treating composition according to the invention to penetrate it. It shows that the treating solution and the treating composition, both having the same amount of active ingredient present, better penetrates a timber, and is thus, capable of producing a timber with greater durability.

### REFERENCE LIST

- 100: Vessel (100).
- 101: Sealed door (101) of vessel (100).
- 102: Interior view of vessel (100) and compartment (112).
- 103: Open door (103) of vessel (100) showing the interior (107) and layout of timbers (104) during treatment process.
- 104: Timbers (104) inserted into vessel (100).
- 105: Separators (105) used to create a horizontal gap between the stacked timbers (104).
- 106: Separators (106) used to create a vertical gap between the stacked timbers (104).
- 107: Interior of vessel (100).
- 108: Seal of cylindrical tubing (110) positioned within vessel (100).
- 109: Valve mechanism comprised in the cylindrical tubing (110) positioned within the vessel (100), which allows for transport of treating composition (113) from compartment (112) into the vessel.
- 110: Cylindrical tubing positioned within the vessel (100).
- 111: Opening at the end of cylindrical tubing (110) positioned within the vessel (100) to allow uptake of the treating composition (113) according to the invention from container (112).
- 112: Compartment comprising the treating composition (113).
- 113: The treating composition according to the invention.
- 201: Timber with surface incisions (201) used according to the invention.
- 202: Timber without surface incisions (202) used according to the invention.

## Claims

1. A composition for a timber preservative comprising as constituents:
i. a Cu-salt;
ii. a further biocide;
iii. an additive;
wherein the additive comprises a polyalkylene ether and;
a) an amine or a salt thereof wherein the amine comprises a poly-alkylene ether moiety; or
b) a fatty acid or a salt thereof; or
c) both (a) and (b).
wherein a weight ratio of the Cu of the Cu-salt to the additive is in the range from 0.1 to 5.

2. The composition according to claim 1, wherein the further biocide is a cyclic organic compound comprising a heteroatom selected from the group of O, B, N, S or P, or a combination of at least two thereof in a cycle.

3. The composition according to any of the preceding claims, wherein the Cu-salt (i.) is selected from the group consisting of CuCO₃, CuCl₂, CuSO₄, Cu(NO₃)₂, Cu(HCO₃)₂, Cu(OH)₂•CuCO₃, CuO, or a combination of at least two thereof.

4. The composition according to any of the preceding claims, wherein the further biocide is a betain or its derivative, or both.

5. The composition according to any of the preceding claims, wherein the polyalkylene ether is of general formula (II): 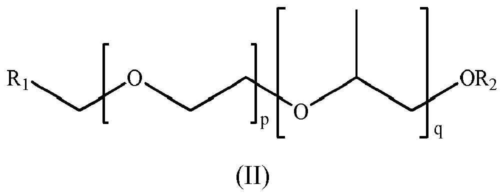 wherein in general formula (II)
R₁ is a saturated linear or branched hydrocarbon containing 1 to 30 C atoms;
R₂ is H or a saturated linear hydrocarbon;
p, q are, independently from each other, an integer value in the range from 1 to 100;

6. The composition according to any of the preceding claims, wherein the amine or a salt thereof wherein the amine comprises a polyalkylene ether moiety, is of the general formula (III): 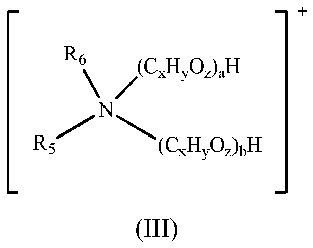 wherein in general formula (III)
R₅, R₆ is a saturated linear or branched hydrocarbon containing 1 to 30 C atoms, wherein the hydrocarbon may also comprise a heteroatom selected from the group of O, N or S, or a combination thereof;
x, y, z are each independently an integer value in the range from 1 to 100;
a, b are each independently an integer value in the range from 1 to 100.

7. The composition according to any of the preceding claims, wherein the fatty acid or a salt thereof, is of the general formula, (IV): 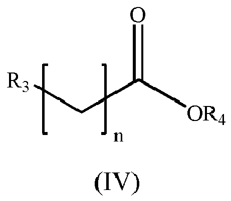 wherein in general formula (IV)
R₃, is a saturated or unsaturated linear or branched, preferably branched, hydrocarbon containing 1 to 30 C atoms;
R₄ is H or a linear hydrocarbon or a salt;
n is an integer value in the range from 1 to 50.

8. A treating composition for a timber preservative comprising:
i. a composition according to any one of the preceding claims in an amount in the range from 0.01 to 30 wt.-%; and
ii. an aqueous solvent in an amount of at least 50 wt.-%, based on the total weight of the treating composition.

9. A process for producing a treating composition, comprising the following process steps;
I. providing an active ingredient composition comprising;
i. a Cu-salt;
ii. a further biocide;
II. providing an additive composition differing from the active ingredient composition wherein the additive composition comprises a polyalkylene ether and;
a) an amine or a salt thereof, wherein the amine comprises a polyalkylene ether moiety; or
b) a fatty acid or a salt thereof; or
c) both (a) and (b);
III. contacting the active ingredient composition (I.) with the additive composition (II.).

10. A kit for a timber preservative comprising:
a. a first compartment, and
b. a further compartment;
wherein the first compartment comprises;
i. a Cu-salt;
ii. a further biocide
wherein the further biocide is a cyclic organic compound comprising a heteroatom selected from the group of O, B, N, S or P, or a combination of at least two thereof in a cycle; and
wherein the further compartment comprises a polyalkylene ether and;
a) an amine or a salt thereof wherein the amine comprises a poly-alkylene ether moiety; or
b) a fatty acid or a salt thereof; or
c) both (a) and (b).

11. A timber formulation comprising;
I. a timber, wherein the timber comprises;
i. a Cu-salt;
ii. a further biocide;
iii. a polyalkylene ether and;
a) an amine or a salt thereof wherein the amine comprises a polyalkylene ether moiety; or
b) a fatty acid or a salt thereof; or
c) both (a) and (b);
wherein the weight of components i. to iii. contribute to the final weight of the timber in an amount in the range of 1 x 10⁻⁵ to 1.5 wt.-% of the timber.

12. A process for producing a timber formulation comprising the following process steps:
I. providing a timber to a vessel;
II. applying an under-atmospheric pressure (vacuum) to the vessel;
III. contacting the timber in the vessel with a treating composition according to claim 8 or obtained via a process according to claim 9;
IV. applying an over-atmospheric pressure to the vessel.

13. A construction comprising a timber, wherein the timber is obtained from:
a. the timber formulation according to claim 11; or,
b. the process according to claim 12.

14. A use of an additive composition for enhancing the penetration of a treating solution or an active ingredient or both, each comprising a Cu-salt and a further biocide in a timber, wherein the additive composition comprises a polyalkylene ether and;
a) an amine or a salt thereof, wherein the amine comprises a polyalkylene ether moiety; or
b) a fatty acid or a salt thereof; or
c) both (a) and (b).

15. A use of a timber in a wood comprising product, wherein the timber is obtained from:
a. the timber formulation according to claims 11; or,
b. the process according to claim 12.
